(19) **Europäisches Patentamt**

**European Patent Office**

**Office européen des brevets**

(11) Veröffentlichungsnummer: **0 142 008**
**B1**

(12) # EUROPÄISCHE PATENTSCHRIFT

(45) Veröffentlichungstag der Patentschrift:
**07.01.88**

(51) Int. Cl.⁴: **F 02 M 59/46**

(21) Anmeldenummer: **84111932.4**

(22) Anmeldetag: **05.10.84**

(54) **Druckventil für Kraftstoffeinspritzpumpen.**

(30) Priorität: **17.11.83 DE 3341575**

(43) Veröffentlichungstag der Anmeldung:
**22.05.85 Patentblatt 85/21**

(45) Bekanntmachung des Hinweises auf die Patenterteilung:
**07.01.88 Patentblatt 88/1**

(84) Benannte Vertragsstaaten:
**DE FR GB**

(56) Entgegenhaltungen:
**CH - A - 394 710**
**DE - B - 1 297 935**
**FR - A - 962 911**
**GB - A - 1 216 682**
**JP - A - 56 110 556**

(73) Patentinhaber: **ROBERT BOSCH GMBH, Postfach 50,
D-7000 Stuttgart 1 (DE)**

(72) Erfinder: **Böhringer, Wilfried, Schillerstrasse 11,
D-7101 Flein (DE)**
Erfinder: **Eheim, Franz, Max-Brod-Weg 8,
D-7000 Stuttgart 40 (DE)**
Erfinder: **Fehlmann, Wolfgang, Im Steinengarten 25,
D-7000 Stuttgart 80 (DE)**
Erfinder: **Laufer, Helmut, Paul-Lincke-Strasse 20,
D-7000 Stuttgart 1 (DE)**
Erfinder: **Zibold, Karl, Strassenäcker 22, D-7144 Asperg
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung geht von einem Druckventil nach der Gattung des Hauptanspruchs aus. Druckventile dieser Art haben die Aufgabe, eventuell entstehende Druckschwingungen im Leitungssystem zwischen dem an die Förderleitung angeschlossenen Kraftstoffeinspritzventil und dem Druckventil schnell zu dämpfen und abzubauen. In bekannter Weise wirkt das eigentliche Druckventil zunächst so, dass sobald die wirksame Förderung des Pumpenkolbens der Kraftstoffeinspritzpumpe beendet ist, auch die Verbindung zwischen Pumpenarbeitsraum und Kraftstofförderleitung unterbrochen wird. Damit soll erreicht werden, dass auch das Einspritzventil sofort geschlossen wird, ohne dass Kraftstoff nacheingespritzt wird. Beim Schliessen des Druckventils und des Kraftstoffeinspritzventils treten jedoch infolge der dynamischen Vorgänge Druckschwingungen im Förderleitungssystem auf, die, wenn sie nicht schnell gedämpft werden, Druckspitzen aufweisen, die die Ventilnadel des Kraftstoffeinspritzventils wieder öffnen können, so dass dann wiederum auch Kraftstoff nacheingespritzt wird. Schliesst das Druckventil jedoch nicht vollständig oder wenigstens zunächst nicht vollständig, so können diese Druckwellen schnell wirksam abgebaut werden, so dass ein Nachtropfen von Kraftstoff vermieden wird. Mit Hilfe des Rückschlagventils wird zu diesem Zweck im Leitungssystem zwischen Einspritzventil und Druckventil ein konstanter Restdruck erhalten, damit keine Verbrennungsgase in das Einspritzventil während der Spritzpausen gelangen. Würde das Rückschlagventil fehlen, so könnte der Druck im Leitungssystem während des Saughubs des Pumpenkolbens erheblich reduziert werden, so dass Verbrennungsgase in das Leitungssystem gelangen könnten. Diese Gase würden die jeweils pro Arbeitstakt einzuspritzende Kraftstoffmenge erheblich verfälschen und auch dem Einspritzventil schaden. Durch die weiterhin vorgesehene Drossel wird neben den oben beschriebenen Wirkungsweisen des Druckventils erreicht, dass einerseits ein konstanter Standdruck in dem Förderleitungssystem während der Spritzpausen eingehalten wird und dass andererseits Druckschwingungen, die zu Nacheinspritzen von Kraftstoff führen würden, wirkungsvoll durch die dämpfende Eigenschaft der Drossel bei offenem Rückschlagventil abgebaut werden.

Ein Druckventil der gattungsgemässen Art ist durch die CH-A-394710 bekannt und hat als Widerlager eine Schraubhülse, die vom pumpenarbeitsraumseitigen Ende der zylindrischen Längsbohrung her eingeschraubt ist. Ein derartiges Widerlager muss in der Einschraubstellung gesichert werden, damit sich die Vorspannung der Druckfeder des Rückschlagventils nicht während des Betriebs des Druckventils ändert und damit auch nicht der exakt einzustellende Öffnungsdruck, der den Haltedruck in der Druckleitung zwischen Einspritzventil und Druckventil bestimmt. Für sich bekannte Mittel zur Sicherung bestehen darin, das Widerlager über seine Gewindegänge mit dem Druckventilschliessglied zu verkleben, verschweissen oder durch Klemmen zu verbinden. Dies stellt einen erheblichen Aufwand bei der Montage des Druckventils und der Einstellung der Rückschlagventilfedervorspannung bzw. des Öffnungsdrucks des Rückschlagventils dar. Ferner besteht das bekannte Druckventil aus mehreren Einzelteilen wie dem Anschlussstutzen, dem Ventilkörper, dem Ventilschliessglied und der Druckfeder des Ventilschliessgliedes einschliesslich dem Rückschlagventil. Diese Teile müssen bei der Endmontage einzeln zusammengesucht und eingesetzt sowie befestigt werden. Dies stellt auch einen erheblichen Aufwand bei der Endmontage dar.

Das erfindungsgemässe Druckventil mit den kennzeichnenden Merkmalen des Hauptanspruchs hat demgegenüber den Vorteil, dass es eine kostengünstige Konstruktion aufweist, die sich leicht montieren lässt, da die Einzelteile des Druckventils mittels der Federklammer im vormontierten Zustand zusammengehalten werden und der Öffnungsdruck des Rückschlagventils sich leicht durch eine einfach und genau durchzuführende Veränderung der Vorspannung der Druckfeder des Rückschlagventils einstellen lässt. Dabei bietet sich die Möglichkeit, den Öffnungsdruck des Rückschlagventils auch im zusammengebauten Zustand des Druckventils exakt zu justieren, indem kontrolliert die von aussen zugängliche Hülse mehr oder weniger weit in den zylindrischen Teil des Ventilkörpers eingepresst wird.

Die Ausgestaltung nach Unteranspruch 2 hat den Vorteil, dass der maximale Hub des Ventilschliessgliedes begrenzbar ist und in keiner Lage des Ventilschliessglieds die Öffnung der Drosselbohrung beeinträchtigt wird, weder durch Anschlag an den Federtellern noch durch Ansammlungen von Verschmutzungen an dieser Stelle.

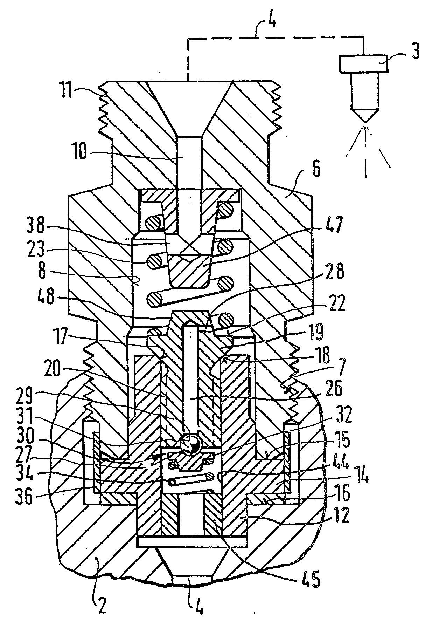

In der Figur ist ein Längsschnitt durch ein Druckventil gezeigt, das in das Gehäuse 2 einer nicht weiter dargestellten Kraftstoffeinspritzpumpe eingeschraubt ist und in einer Förderleitung 4 zwischen dem nicht dargestellten Pumpenarbeitsraum der Kraftstoffeinspritzpumpe und einem Einspritzventil 3 der zu versorgenden nicht dargestellten Brennkraftmaschine sitzt. Das Druckventil weist dabei einen Anschlussstutzen 6 auf, der in eine Gewindebohrung 7 des Gehäuses eingeschraubt ist. Der Anschlussstutzen weist eine axiale Ausnehmung 8 auf, die zur Einschraubseite hin offen ist und im wesentlichen die Form einer Sackbohrung hat. Koaxial zur axialen Ausnehmung geht von dieser ein Anschlusskanal 10 ab, der im Anschlussnippel 11 des Anschlussstutzens mündet und die axiale Ausnehmung mit der Förderleitung verbindet.

Vom pumpenseitigen Ende her ist in die axiale Ausnehmung 8 ein rohrförmiger Ventilkörper 12 eingesetzt, der an seinem pumpenseitigen Ende einen Bund 14 aufweist, über den er durch die pumpenseitige Stirnseite 15 des Anschlussstutzens an einer Schulter 16 der Gewindebohrung 7 gehalten wird. Vom pumpenseitigen Ende der Gewindebohrung 7 führt die Förderleitung 4 zum Pumpenarbeitsraum. Am in die axiale Ausnehmung 8 ragenden stirnseitigen Ende weist der rohrförmige Ventilkörper einen Ventilsitz 17 auf, auf dem eine kegelförmige Dichtfläche 18 eines Ventilschliessgliedes 19 zur Anlage kommt. Dieses weist in bekannter Weise flügelförmige Führungsflächen 20 auf, die in einer als Druchgangskanal ausgebildeten Innenbohrung 44 des Ventilkörpers geführt werden und zwischen denen Kraftstoff zum Ventilsitz hindurchtreten kann. Auf einer in den anschlusskanalseitigen Teil der Ausnehmung 8 ragenden Schulter 22 des Ventilschliessgliedes 19 greift eine Druckventilfeder 23 an, die sich andererseits über einen nutförmigen Federteller 47 am anschlusskanalseitigen Ende der Ausnehmung 8 abstützt. Der Boden dieses Federtellers dient als Anschlag für das Ventilschliessglied 19. In der Mantelfläche des hutförmigen Federtellers 47 sind Verbindungsöffnungen 38 vorgesehen, die den Durchlass zum Anschlusskanal 10 herstellen. Diese Ausgestaltung hat den Vorteil, dass zu grosse Öffnungshübe des Ventilschliessglieds 19 vermieden werden. Durch die labyrinthartige Verbindung über die Verbindungsbohrungen 38 wird verhindert, dass grössere Teile in die Förderleitung gelangen können, in dem Falle, in dem es zu einem Bruch an Teilen des Druckventils kommt.

Das Ventilschliessglied 19 weist ferner einen Längskanal in Form einer axialen Sackbohrung 26 auf, die im Bereich eines der Führung der Druckventilfeder 23 dienenden Führungszapfens 48 in eine Drosselbohrung 28 übergeht und dort in die axiale Ausnehmung 8 mündet. Die Drosselbohrung zweigt dabei etwa radial vom Längskanal 26 im Bereich des Führungszapfens 48 ab. Dieses Ventil hat den Vorteil, dass in Fällen, wo das Ventilschliessglied 19 zur Anlage an den hutförmigen Federteller 47 gelangt, die Drosselbohrung nicht beschädigt oder mit Schmutzteilen zugesetzt wird. Weiterhin ist der maximale Hub des Ventilschliessgliedes 19 durch Anlage an einem hutförmigen Federteller 47 begrenzbar.

Pumpenseitig ist das Ende der Sackbohrung 26 als Ventilsitz 29 eines Rückschlagventils 30 ausgebildet, dessen Ventilschliessglied eine Kugel 31 ist, die über einen Federteller 32 und eine eingespannte Druckfeder 34 in Schliessstellung gebracht ist.

Der Federteller weist vorteilhaft eine der Kugelform des Ventilschliessglieds 31 angepasst zentrische Ausnehmung 27 auf. Damit kann die Kugel 31 bei der Montage wesentlich leichter in ihre Arbeitsstellung gebracht werden.

Zur Aufnahme des Ventilschliessglieds 19 und des Rückschlagventils 30 weist der Ventilkörper 12 die glatte durchgehende Innenbohrung 44 auf, in der das Ventilschliessglied 19 mit seinen Führungsflächen 20 geführt wird. In besonders vorteilhafter Weise ist dort in die Innenbohrung 44 nunmehr als Widerlager für die Druckfeder 34 des Rückschlagventils 30 eine Hülse 45 eingepresst. Diese Ausgestaltung hat den Vorteil, dass durch mehr oder weniger weites Einpressen der Hülse 45 der Öffnungsdruck des Rückschlagventils 30 exakt eingestellt werden kann. Dies kann vorzugsweise im zusammengebauten Zustand des Druckventils erfolgen, so dass genaueste Einstellwerte mit geringstem Aufwand erzielt werden. Das Rückschlagventil wird dabei vom anschlussseitigen Ende her mit Druckflüssigkeit aus einer Konstantdruckquelle in Höhe des einzustellenden Haltedruckes belastet und die Hülse 45 kontinuierlich so weit eingepresst, bis das Ventil schliesst.

Wird beim Betrieb einer Kraftstoffeinspritzpumpe, in die das erfindungsgemässe Druckventil eingebaut ist, Kraftstoff zur Brennkraftmaschine gefördert, so wird unter dem Druck des über die Förderleitung 4 zugeführten Kraftstoffes das Ventilschliessglied 19 geöffnet. Am Ende der Kraftstofförderung kehrt das Ventilschliessglied 19 zu seinem Ventilsitz zurück. Zugleich schliesst das Einspritzventil am Ende der Förderleitung. Im Anschluss an dieses schlagartige Unterbrechen der Förderung laufen in dem eingeschlossenen Volumen zwischen Druckventil und Einspritzventil Druckwellen hin und her, die in der Lage sind, das Einspritzventil zu einem späteren Zeitpunkt nochmals kurzzeitig zu öffnen. Durch das vorgesehene Rückschlagventil in Verbindung mit der Drosselbohrung 28 wird dies jedoch verhindert. Bei einer am Ventilschliessglied 19 ankommenden Druckwelle wird das Rückschlagventil 30 geöffnet, sobald der Standdruck, den dieses Ventil einhalten soll, überschritten wird. Dabei fliesst Kraftstoff in geringem Masse über die Drossel 28 zurück. Dies bewirkt durch verzögerten Druckabbau bis auf den am Rückschlagventil eingestellten Standdruck eine Dämpfung der Druckschwingungen im Förderleitungssystem. Zugleich wird mit dem Rückschlagventil ein Mindeststanddruck eingehalten, so dass verhindert wird, dass während des sich an den Einspritzvorgang des Einspritzventils anschliessenden Druckaufbau im Brennraum Verbrennungsgase in das Einspritzventil und in die Förderleitung gelangen können, die dem Ventil und der genauen Dosierung von Kraftstoff pro Arbeitstakt schaden würden. Der Aufbau des Druckventils erlaubt geringe Baumasse und eine günstige Fertigung. Die Teile des Druckventils sind leicht zu montieren, wobei der Ventilkörper und der Anschlussstutzen über eine federnde Klammer 36 für den Transport des Druckventils zusammengehalten werden können.

**Patentansprüche**

1. Druckventil zum Einbau in die Förderleitung (4) zwischen einem Pumpenarbeitsraum einer Kraftstoffeinspritzpumpe und der Einspritzstelle der zu versorgenden Brennkraftmaschine mit einem Anschlussstutzen (6), der auf der Pumpenseite eine axiale Ausnehmung (8) aufweist, von der ein Anschlusskanal (10) zu einem Anschluss für die Förderleitung am Anschlussstutzen abführt, mit einem mit einem Ventilsitz (17) versehenen Ventilkörper (12), der an seinem Umfang einen Bund (14) aufweist, der durch die pumpenseitige Stirnseite (15) des Anschlussstutzens zwischen diesem und einer Schulter (16) am Einspritzpumpengehäuse einspannbar ist und einen Durchgangskanal (44) aufweist, wobei der Aussendurchmesser des Bundes (14) gleich gross ist wie der Aussendurchmesser eines an diesen angrenzenden Teiles des Anschlussstutzens (6), ferner mit einem Druckventilschliessglied (19), das zwischen Ventilsitz (17) und einer sich am anschlusskanalseitigen Ende der Ausnehmung (8) abstützenden Druckfeder (23) eingespannt ist und einen eine Drosselstelle (28) enthaltenden Längskanal (26) aufweist, der die axiale Ausnehmung (8) mit der pumpenarbeitsraumseitigen Förderleitung verbindet und der durch ein Schliessglied (31) eines Rückschlagventils (30) verschliessbar ist, das eine sich ortsfest mittelbar am Ventilkörper abstützende Druckfeder (34) aufweist, wobei der Durchgangskanal (44) des Ventilkörpers (12) als zylindrische Längsbohrung (44) ausgebildet ist, in die als Widerlager für die Druckfeder (34) des Rückschlagventils (30) eine Hülse (45) eingesetzt ist, dadurch gekennzeichnet, dass die Hülse (45) eingepresst ist und durch die Einpresstiefe der Öffnungsdruck des Rückschlagventils (30) justiert ist und dass der Bund des Ventilkörpers (12) mit dem angrenzenden Teil des Anschlussstutzens (6) über eine Federklammer (36) verbunden ist.

2. Druckventil nach Anspruch 1, dadurch gekennzeichnet, dass der Längskanal (26) des Ventilschliessgliedes (19) als Sackbohrung ausgebildet ist, von der aus quer zur Achse des Ventilschliessgliedes eine Drosselbohrung (28) abführt und an den in die axiale Ausnehmung (8) ragenden Teil des Ventilschliessgliedes (19) mündet und das in der axialen Ausnehmung (8) ein hutförmiger Federteller (47) vorgesehen ist mit quer durch die radiale Wand gehenden Verbindungsöffnungen (38), wobei der Federteller zugleich als Anschlag für das Ventilschliessglied dient.

## Claims

1. Delivery valve for fitting into the delivery line (4) between a pump working chamber of a fuel injection pump and the injection point of the internal-combustion engine to be supplied, having a connecting piece (6) which, on the pump side, has an axial recess (8) from which a connecting channel (10) leads away to a connection for the delivery line on the connecting piece, having a valve body (12) which is provided with a valve seat (17) and which has on its periphery a collar (14) which can be clamped between the connecting piece and the shoulder (16) on the injection pump housing by the end face (15) of the connecting piece on the pump side and has a through channel (44), with the outside diameter of the collar (14) being the same size as the outside diameter of a part of the connecting piece (6) which adjoins it, moreover having a delivery-valve closing member (19) which is clamped between the valve seat (17) and a compression spring (23), supported on the end of the recess (8) which is on the connecting channel side, and has a longitudinal channel (26) which contains a throttle point (28), connects the axial recess (8) to the delivery line on the pump working chamber side and can be closed by a closing member (31) of a non-return valve (30) which has a compression spring (34) which is supported in fixed manner indirectly on the valve body, with the passage channel (44) of the valve body (12) being made as a cylindrical longitudinal bore (44) into which a sleeve (45) is inserted as an abutment for the compression spring (34) of the non-return valve (30), characterized in that the sleeve (45) is pressed in and the opening pressure of the non-return valve (30) is adjusted by the press-in depth, and that the collar of the valve body (12) is connected to the adjoining part of the connecting piece (6) via a spring clip (36).

2. Delivery valve according to claim 1, characterized in that the longitudinal channel (26) of the valve closing member (19) is made as a blind bore from which a throttle bore (28) leads away at right angles to the axis of the valve closing member and opens out at the part of the valve closing member (19) which protrudes into the axial recess (8), and that a hat-shaped spring plate (47) having connecting openings (38) passing at right angles through the radial wall is provided in the axial recess (8), with the spring plate at the same time acting as a stop for the valve closing member.

## Revendications

1. Soupape de refoulement destinée à être montée dans la conduite d'alimentation (4) entre le volume de travail d'une pompe d'injection de combustible et le point d'injection d'un moteur à combustion interne à alimenter en combustible, avec un embout de raccordement (6) qui présente du côté de ladite pompe un évidement axial (8), duquel part un canal de raccordement (10) vers le raccordement avec ladite conduite d'alimentation sur ledit embout de raccordement, avec un corps de soupape (12) muni d'un siège de soupape (17), ledit corps de soupape présentant à sa périphérie un rebord (14) qui peut être serré, par la face frontale (15) du côté de ladite pompe dudit embout de raccordement, entre celui-ci et un épaulement (16) sur le carter de ladite pompe d'injection, et qui comporte un canal de passage (44), le diamètre extérieur dudit rebord (14) étant égal au diamètre extérieur d'une partie dudit embout de raccordement (6) voisine dudit rebord, ayant de plus une pièce d'obturation de soupape (19) qui est serrée entre un siège de soupape (17) et un ressort de compression (23) s'appuyant sur l'extrémité dudit évidement (8) du côté dudit canal de raccordement, et présentant un canal longitudinal (26) comportant un lieu d'étranglement (28) qui relie ledit évidement axial (8) à la dite conduite d'alimentation du côté du volume de travail de ladite pompe, et qui est obturable par une pièce d'obturation (31) d'un clapet anti-retour (30), qui présente un ressort de compression (34) s'appuyant de façon fixe directement sur ledit corps de soupape, le canal de passage (44) dudit corps de soupape (12) étant formé en un alésage longitudinal cylindrique (44), dans lequel une douille (45) est installée pour servir de butée audit ressort de compression (34) dudit clapet anti-retour (30), caractérisé en ce que ladite douille (45) est pressée et que la pression d'ouverture dudit clapet anti-retour (30) est réglée par la profondeur de pressage de ladite douille, et que ledit rebord dudit corps de soupape (12) est relié à la partie voisine dudit embout de raccordement (6) par une pince élastique (36).

2. Soupape de refoulement selon la revendication 1, caractérisé en ce que ledit canal longitudinal (26) de ladite pièce d'obturation de soupape (19) présente un trou borgne, duquel perpendiculairement à l'axe de ladite pièce d'obturation de soupape un alésage d'étranglement (28), et qui débouche dans la partie dominante de ladite pièce d'obturation de soupape (19) dans ledit évidement axial (8), et que dans l'évidement axial (8) est prévu un socle pour ressort (47) en forme de chapeau comportant des ouvertures de liaison (38) transversales à travers la paroi radiale, ledit socle pour ressort servant en même temps de butée pour ladite pièce d'obturation de soupape.